# EUROPÄISCHE PATENTSCHRIFT

(11) **EP 1 660 762 B1**
(45) Veröffentlichungstag und Bekanntmachung des Hinweises auf die Patenterteilung: **11.07.2018**
(21) Anmeldenummer: 04786238.8
(22) Anmeldetag: 26.08.2004
(51) Int. Cl.: F02C 7/143

(54) **ZERSTÄUBUNGS- UND EINDÜSUNGSSYSTEM, UND VERFAHREN ZUM BETRIEB**
ATOMIZATION AND INJECTION SYSTEM, AND METHOD FOR OPERATING THE SAME
SYSTÈME DE PULVÉRISATION ET D'INJECTION ET PROCÉDÉ POUR LE FAIRE FONCTIONNER

(30) Priorität: 01.09.2003 DE 10340177
(43) Veröffentlichungstag der Anmeldung: 31.05.2006
(73) Patentinhaber: Ansaldo Energia IP UK Limited, London W1G 9DQ (GB)
(72) Erfinder: JIMENEZ HAERTEL, Carlos, 81247 München (DE); OESTERLE, Stefan, 5300 Turgi (CH); REUMSCHÜSSEL, Carsten, 79639 Grenzach-Wyhlen (DE); SAVIC, Sasha, 5430 Wettingen (CH)
(74) Vertreter: Bernotti, Andrea
(86) Internationale Anmeldenummer: PCT/EP2004/051928
(87) Internationale Veröffentlichungsnummer: WO 2005/021950

(56) Entgegenhaltungen:
- EP-A- 1 203 866
- WO-A-03/089777
- DE-A1- 10 256 193
- US-A- 6 045 332
- US-A1- 2002 083 712
- US-A1- 2002 106 292
- US-B1- 6 470 667

## Beschreibung

### Technisches Gebiet

Die vorliegende Erfindung betrifft ein Verfahren zum Betrieb eines Zerstäubungs- und Eindüsungssystems.

### Stand der Technik

Die Eindüsung von Flüssigkeit in den Ansaugkanal von luftatmenden Wärmekraftmaschinen ist im Stand der Technik als Mittel zur Erhöhung der Leistung bekannt. In FR 1,563,749, DE 25 49 790, oder EP 898645 ist beispielsweise vorgeschlagen worden, flüssige Wassertröpfchen in einen Verdichter einer Gasturbogruppe einzudüsen. Dies ist außerdem auch aus WO03089777 und US20020083712 bekannt. Insbesondere, wird in WO03089777 ein Flüssigkeitsnebel in den Ansaugkanal eingedüst um die Stickoxidemissionen zu reduzieren. Während, in US20020083712 insbesondere Wasser in den Ansaugkanal eingedüst wird um die Leistung der Gasturbine während des Betriebs bei hoher Umgebungslufttemperatur zu erhöhen.

Häufig werden dabei Einspritzsysteme verwendet, bei denen Schaltventile Düsen oder Düsengruppen zuschalten, oder bei denen der Durchfluss von Ventilen gesteuert wird, deren Kennlinie stark von der Linearität des Durchflussverhaltens über der Ventilstellung abweicht. Dies ist beispielsweise bei Kugelventilen der Fall, deren Ventilkennlinie stark nichtlinear ist. Derartige Schaltvorgänge führen zu Druckschlägen in den Einspritzsystemen und zugehörigen Rohrleitungssystemen, welche die Integrität des Systems zu gefährden vermögen und/oder eine entsprechende Überdimensionierung erfordern.

### Darstellung der Erfindung

Hier will die Erfindung Abhilfe schaffen. Der in den Ansprüchen gekennzeichneten Erfindung liegt die Aufgabe zugrunde, ein Verfahren der eingangs genannten Art anzugeben, welches die Nachteile des Standes der Technik zu vermeiden vermag.

Erfindungsgemäss wird diese Aufgabe unter Verwendung eines Verfahrens gemäss einem der Verfahrensansprüche gelöst.

Ein Zerstäubungs- und Eindüsungssystem zur Förderung der zu zerstäubenden Flüssigkeit weist eine Pumpe mit einem drehzahlregelbaren Antrieb auf. In einer bevorzugten Betriebsvariante wird diese Pumpe mit einem begrenzten Drehzahl-Zeit-Gradienten betrieben. Der Drehzahl-Zeit-Gradient kann einerseits fest in einer Drehzahlsteuerung der Pumpe vorgegeben sein. In einer weiteren Betriebsweise wird der Drehzahl-Zeit-Gradient der Pumpe auf einen vorgegebenen oberen Grenzwert begrenzt. In einer weiteren Ausführungsform wird wenigstens ein Druck und/oder ein Massenstrom stromab der Pumpe gemessen, und es erfolgt eine Regelung der Pumpendrehzahl mit dem gemessenen Druck und/oder Massenstrom als Regelgrösse.

In einer bevorzugten Ausführungsform ist das Zerstäubungs- und Eindüsungssystem mit Drossel- und/oder Absperrorganen versehen, welche als Proportionalventile mit einem im Wesentlichen linearen Verlauf der Flüssigkeitsmassenstrom-Kennlinie über der Ventilstellung ausgeführt sind. Diese dienen insbesondere der gesteuerten Beaufschlagung von Einspritz- und Zerstäuberdüsen und/oder -düsengruppen mit der von der Pumpe geförderten Flüssigkeit. Beispielsweise lässt ein Kugelventil beim Öffnen ab einem vollkommen geschlossenen Zustand in einer ersten Phase nahezu keinen Massenstrom durchströmen, weist aber in anderen Bereichen der Öffnungskennlinie eine sehr starke Abhängigkeit des Massenstroms von der Ventilstellung auf. Diese inhomogene Kennlinie des Massenstroms über der Zeit ist eine wesentliche Ursache für Druckschläge im System. Die verwendenden Proportionalventile hingegen weisen im Wesentlichen im gesamten Öffnungsbereich eine weitestgehend gleichmässige, lineare Abhängigkeit des Flüssigkeitsdurchflusses von der Ventilstellung auf. Dies ermöglicht eine gleichmässige und kontinuierliche Steuerung des durch die Einspritz- und/oder Zerstäuberdüsen durchgesetzten Massenstroms, wodurch Druckschläge vermieden werden. In einer bevorzugten Betriebsart erfolgt die Verstellung der Ventilstellung mit einem vorbestimmten Ventilstellungs-Zeit-Gradienten. In einer anderen bevorzugten Betriebsart wird der Ventilstellungs-Zeit-Gradient auf einen Maximalwert begrenzt.

In einer weiteren vorteilhaften Betriebsart des Systems wird ein erster Druckmesswert stromab der Pumpe und stromauf eines Ventils gemessen. Der erste Druckmesswert wird als Regelgrösse für die Regelung der Pumpe herangezogen. Dabei wird in einer Ausführungsform die Drehzahl der Pumpe auf eine Konstanthaltung des Druckes geregelt. In einer anderen Ausführungsform wird die Pumpendrehzahl derart geregelt, dass ein vorbestimmter Druck-Zeit-Gradient des ersten Druckmesswertes resultiert. Die Druckregelung mit der Pumpendrehzahl als Stellgrösse kann grundsätzlich erfolgen, indem bei einer positiven Istwert-Sollwert-Differenz des Druckmesswertes die Pumpendrehzahl vermindert wird, und umgekehrt, wenn der gemessene Istwert unter dem Sollwert liegt, die Pumpendrehzahl erhöht wird. Mit Vorteil wird zusätzlich stromab eines Proportionalventils ein zweiter Druck gemessen, und die Stellung des Ventils wird derart verändert, dass ein maximaler zeitlicher Gradient des zweiten Druckmesswertes zuverlässig unterschritten bleibt. Dabei ist unter der Voraussetzung eines konstanten Flüssigkeitsvordrucks vorauszusetzen, dass der zweite Druckmesswert beim Öffnen des Ventils ansteigt, und beim Schliessen des Ventils sinkt, so, dass dem Fachmann auch eine ausreichende technische Lehre vermittelt wird, wie die Erfindung auszuführen ist. In einer Ausführungsform wird das Ventil also bei konstantem Vordruck anfänglich mit einem vorbestimmten Gradienten der Ventilstellung verstellt. Dabei wird der Druck stromab des Ventils kontinuierlich gemessen. Wenn der Druck sich schneller verändert, als maximal zulässig, wird die Geschwindigkeit der Ventilverstellung vermindert, wodurch die Geschwindigkeit der Druckveränderung wieder auf einen zulässigen Wert eingeregelt wird. In einer weiteren Betriebsvariante wird zur Steuerung des Ventils zusätzlich auch der erste Druckmesswert mit ausgewertet.

In einer weiteren bevorzugten Ausführungsform ist eine Massenstrommessstelle zur Messung des von der Pumpe geförderten Massenstroms angeordnet. Bevorzugt wird dann der dort gemessene Massenstrom als Regelgrösse für die Regelung der Pumpendrehzahl herangezogen, wobei innerhalb des Pumpenreglers auch der Druckgradient ausgewertet wird, um die Pumpendrehzahl so zu steuern, dass der Betrag des Druckgradienten einen Maximalwert nicht überschreitet.

Dabei ist generell vorauszusetzen, dass bei konstanten Drücken vor und nach der Pumpe der Massenstrom mit steigender Drehzahl steigt. Weiterhin steigt bei gleichbleibendem Massenstrom der Druck nach der Pumpe mit der Drehzahl. Im Weiteren wird vorausgesetzt, dass der Fachmann mit den allgemeinen Grundlagen von Pumpenkennfeldern, bei denen der Druck über dem Massenstrom für verschiedene Drehzahlen aufgetragen ist, vertraut ist. Das Verhältnis von Druck und Massenstrom wird durch die Durchströmungscharakteristik der stromab der Pumpe angeordneten Komponenten bestimmt.

### Kurze Beschreibung der Zeichnung

Die Erfindung wird nachfolgend anhand von in der Zeichnung illustrierten Ausführungsbeispielen näher erläutert. Im Einzelnen zeigen:
Figur 1 eine Gasturbogruppe mit einem Zerstäubungs- und Eindüsungssystem;
Figur 2 beispielhafte Ventilkennlinien eines Kugelventils und eines Proportionalventils;
Figur 3 eine erste Ausführungsform eines Zerstäubungs- und Eindüsungssystems ; und
Figuren 4 und 5 weitere Ausführungsformen eines Zerstäubungs- und Eindüsungssystems.

Für das Verständnis nicht unmittelbar notwendige Elemente sind weggelassen. Die Ausführungsbeispiele sind rein instruktiv zu verstehen, und sollen nicht zu einer Einschränkung der in den Ansprüchen gekennzeichneten Erfindung herangezogen werden.

### Weg zur Ausführung der Erfindung

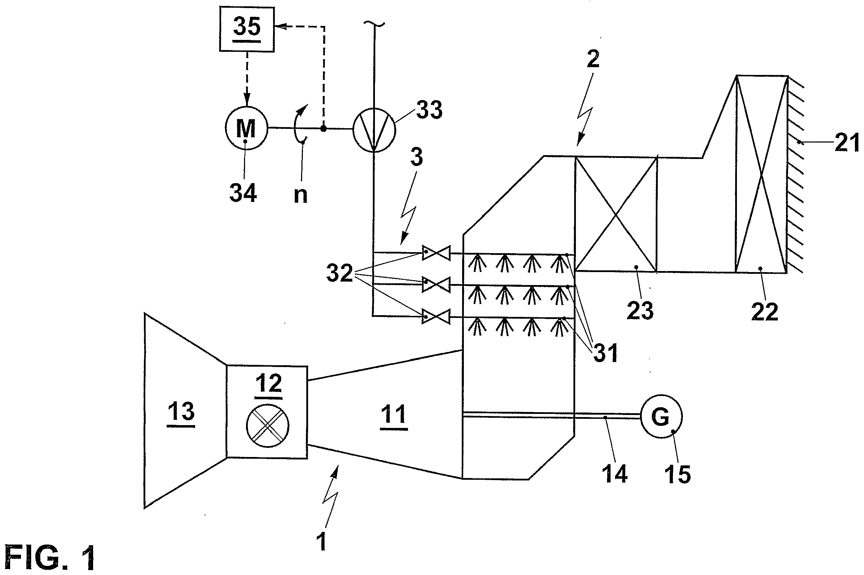

In Figur 1 ist eine Gasturbogruppe 1, umfassend einen Verdichter 11, eine Brennkammer 12, und eine Turbine 13 dargestellt. Die Gasturbogruppe treibt über eine Welle 14 einen Generator 15 an. Stromauf des Verdichters 11 ist ein Luftansaugkanal 2 angeordnet. Am Lufteinlass dieses Kanals sind Wetterschutzlamellen 21 angeordnet, gefolgt von einem Luftfilter 22 und einem Schalldämpfer 23. Weiterhin ist ein Zerstäubungs- und Eindüsungssystem 3 für eine als Flüssigkeitsnebel in den Ansaugkanal einzusprühende Flüssigkeit angeordnet. Diese umfasst im Ansaugkanal 2 angeordnete Düsenrohre 31, welche Zerstäuberdüsen tragen. Die Düsenrohre 31 sind mit nicht explizit dargestellten, dem Fachmann aber ohne Weiteres geläufigen Einspritzdüsen versehen, und dienen zu deren Anspeisung. Dabei ist die Ausführung selbstverständlich keineswegs auf drei Düsenrohre beschränkt. Die Flüssigkeit mit dem zur Zerstäubung notwendigen Flüssigkeitsdruck wird von der Pumpe 33 gefördert, und über Absperr- und/oder Drosselorgane 32 den einzelnen Düsenrohren zugeführt. Die Absperr- und/oder Drosselorgane dienen der Ansteuerung von Düsen- und/oder Düsengruppen. Die Pumpe 33 wird von einem Motor 34 angetrieben; dieser wiederum wird von einem Steuergerät 35 derart angesteuert, dass ein drehzahlregelbarer Antrieb für die Pumpe 33 zur Verfügung steht. Der drehzahlregelbare Antrieb der Pumpe ermöglicht es, Drehzahl- und Leistungsänderungen der Pumpe gesteuert oder geregelt, mit begrenzten Gradienten und somit ohne Druckschläge, umzusetzen.

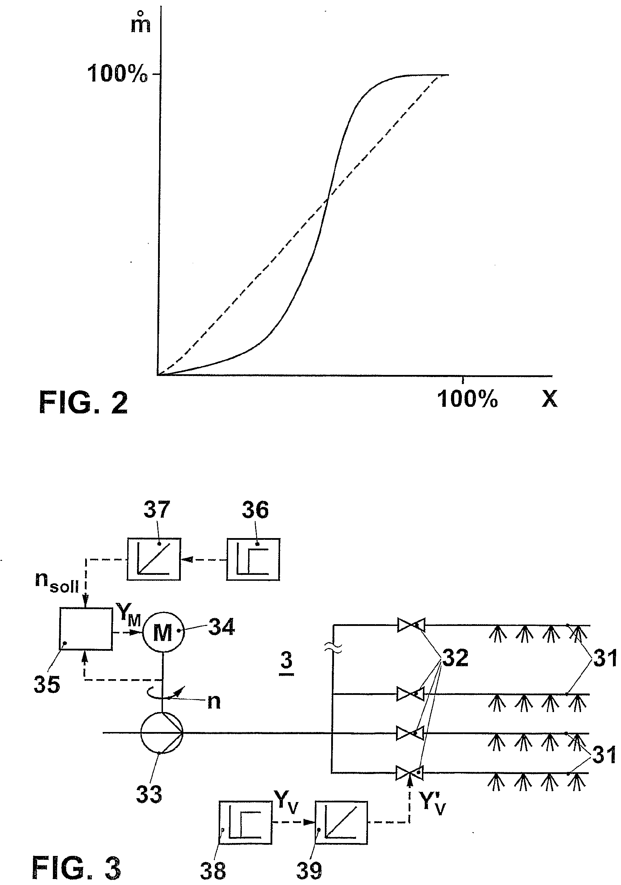

In einer Ausführungsform der Erfindung wird zur Inbetriebnahme des Zerstäubungs- und Eindüsungssystems ein Teil der Ventile 32 geöffnet, und danach die Pumpe 33 langsam angefahren. Dabei wird die Anfahrgeschwindigkeit mittels der Drehzahlregelung 35 so langsam vorgenommen, dass Druckschläge im Leitungssystem des Zerstäubungs- und Eindüsungssystem vermieden werden. Vorteilhafterweise sind die Ventile 32 Proportionalventile, mit einem weitestgehend linearen Verlauf des Massenstroms über der Ventilstellung. Die Proportionalventile ermöglichen es auf besonders einfache Art und Weise, beispielsweise ein Zuschalten weiterer Düsengruppen oder deren Abschalten kontinuierlich mit begrenzten Gradienten vorzunehmen. Damit werden einerseits Druckschläge in den Düsenrohren 31 vermieden, als auch eine Überlastung der Steuerung 35 der Pumpe 33 durch übergrosse Massenstromgradienten. In Figur 2 sind sich beispielhafte Ventilkennlinien eines Proportionalventils und eines Kugelventils gegenübergestellt. Das Kugelventil, durchgezogene Linie, weist eine höchst nichtlineare Kennlinie auf. Damit gestaltet sich dessen Ansteuerung schwierig, weil das Übertragungsverhalten, mit dem sich eine Veränderung der Ventilstellung X in eine Änderung des Massenstroms ṁ umsetzt, in hohem Masse von der Ventilstellung abhängig ist. Eine kontinuierliche, "ruckfreie" und stabile Massenstromsteuerung erfordert daher eine fortwährende Kenntnis der Ventilstellung und der Ventilkennlinie. Bei einem Proportionalventil, gestrichelt dargestellt, ist die Massenstrom-Ventilstellungskennlinie hingegen in weiten Bereichen linear, so, dass das Übertragungsverhalten bei der Integration in einen Regelkreis oder in eine Steuerung eine Konstante ist. Es ist also immer identisch, welche Massenstromänderung Δṁ eine Änderung der Ventilstellung ΔX nach sich zieht, und damit kann ein Proportionalventil auf wesentlich einfachere Weise, ohne Rückmeldung der Ventilstellung, mit voraussagbarem Übertragungsverhalten, in eine Steuerung oder Regelung integriert werden.

Eine erste einfache Ausführungsform ist in Figur 3 dargestellt. Das Zerstäubungs- und Eindüsungssystem 3 ist wesentlich identisch mit der in Figur 1 beschriebenen. Der Motor 34 zum Antrieb der Pumpe 33 ist drehzahlregelbar. Dazu wird einem Drehzahlregler 35 einerseits ein Sollwert n_{SOLL} vorgegeben. Dies wird mit einem gemessenen Istwert n der Drehzahl der Antriebswelle verglichen. Der Regler bildet aus der Regelabweichung eine Steuergrösse Y_{M} für den Motor 34, und die Ist-Drehzahl wird somit durch den Regler 35 auf den Sollwert eingeregelt. Der Drehzahlsollwert wird von einem Funktionsblock 36 vorgegeben. Der Vorgabewert wird dem Regler 35 über ein Verzögerungsglied 37 zugeführt, welches eine sprunghafte Änderung des Vorgabewertes in eine Rampenfunktion mit einem begrenzten Gradienten umwandelt, derart, dass der am Regler 35 anliegende Drehzahlsollwert mit einem begrenzten zeitlichen Gradienten ansteigt. Ebenso wird eine von einem Funktionsblock 38 vorgegebene unstetige Stellgrösse Yv für ein Ventil 32 in einem Verzögerungsglied 39 in eine stetig steigende Rampenfunktion der Ventilsteuergrösse Y'v umgesetzt, derart, dass auch die Ventilstellung nur mit begrenzter Geschwindigkeit verändert wird. Diese Massnahmen, und insbesondere ihre Kombination, vermeiden Unstetigkeiten der Durchströmung im Rohrleitungssystem, wodurch potenziell schädliche Druckschläge vermieden werden.

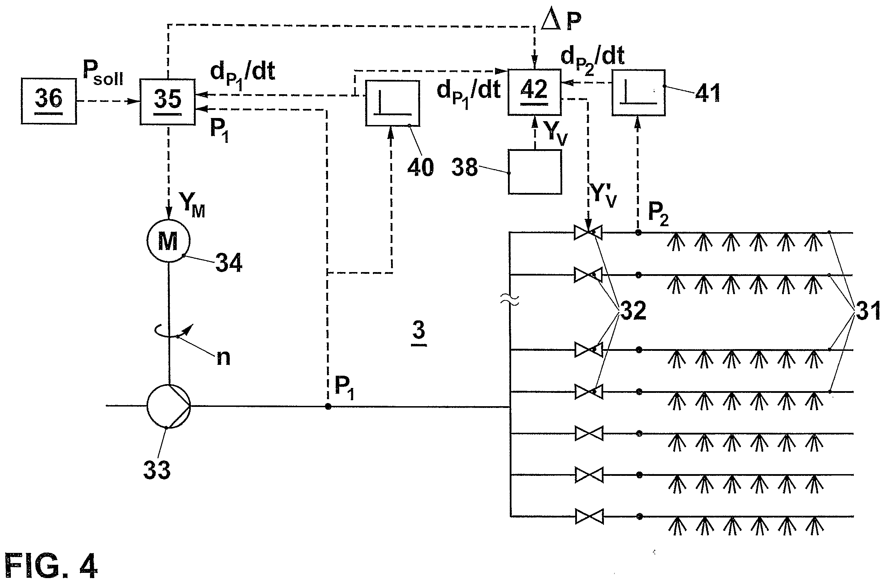

Eine besonders bevorzugte Ausführungsform ist in Figur 4 dargestellt. Stromab der Pumpe 33 und stromauf der Ventile 32 - bevorzugt finden Proportionalventile Verwendung - ist eine erste Druckmessstelle angeordnet. Die Druckmessstelle liefert einen Druckmesswert p₁ an den Regler 35. Der Sollwertgeber 36 liefert einen Sollwert des Druckes p_{SOLL} an den Regler 35.

Aus der Soll-Istwert-Abweichung bildet Regler 35 die Steuergrösse Y_{M} zur Steuerung des Motors 34 für den Pumpenantrieb. Wenn der gemessene Druck kleiner als der Sollwert ist, so wird die Drehzahl n erhöht, umgekehrt vermindert. Weiterhin wird das Druckmesssignal p₁ zu einem Differenzierer 40 geleitet, der den Druckgradienten dp₁/dt ermittelt. Dieser wird ebenso im Regler 35 ausgewertet, und auf einen betragsmässigen Maximalwert begrenzt. Erfindungsgemäß, wenn der Betrag des Gradienten grösser ist als der zulässige Maximalwert, wird die Geschwindigkeit der Verstellung der Pumpendrehzahl entsprechend angepasst, damit der Betrag des Gradienten unterhalb des zulässigen Maximalwertes eingestellt wird. Weiterhin wird mit einer stromab eines Ventils angeordneten Druckmessstelle ein zweiter Druck p₂ gemessen. Ein Differenzierer 41 bildet den Druckgradienten dp₂/dt. Ein Funktionsblock 38 gibt Stellbefehle Yv für das Ventil 32 aus. Ein Stellbefehl wird jedoch nicht unmittelbar an das Ventil 32 weitergeleitet, sondern zunächst in einem Regler 42 verarbeitet. Eine Verstellung des Ventils 32 zieht selbstverständlich einen Druckgradienten dp₂/dt nach sich. Dieser Druckgradient wird im Regler 42 ausgewertet, und der Steuerbefehl Y_{V} wird als verzögerter Steuerbefehl Y'_{V} an das Ventil 32 weitergeleitet. Weiterhin zieht eine Verstellung des Ventils 32 auch eine Veränderung der stromauf herrschenden Strömungs- und Druckverhältnisse nach sich, so, dass die oben beschriebene Regelung der Pumpe aktiv werden muss. Wie für den Fachmann leicht ersichtlich führt ohne Regelung der Pumpe ein Öffnen eines Ventils zu einem Abfall des ersten Druckes, und ein Schliessen zu einem Ansteigen des ersten Druckes. Daher wird bevorzugt im Regler 42 auch der erste Druckmesswert berücksichtigt. So werden mit Vorteil der erste Druckgradient dp₁/dt und die Regelabweichung des ersten Druckes Δp als Eingangsgrössen zum Regler 42 geführt. Die Verstellgeschwindigkeit des Ventils wird gegebenenfalls dann weiter verringert, wenn der Gradient oder die Regelabweichung des ersten Druckes als Betrag einen zulässigen Maximalwert erreichen oder überschreiten. Damit wird vermieden, dass die Regelgeschwindigkeit der Pumpenregelung überfordert wird.

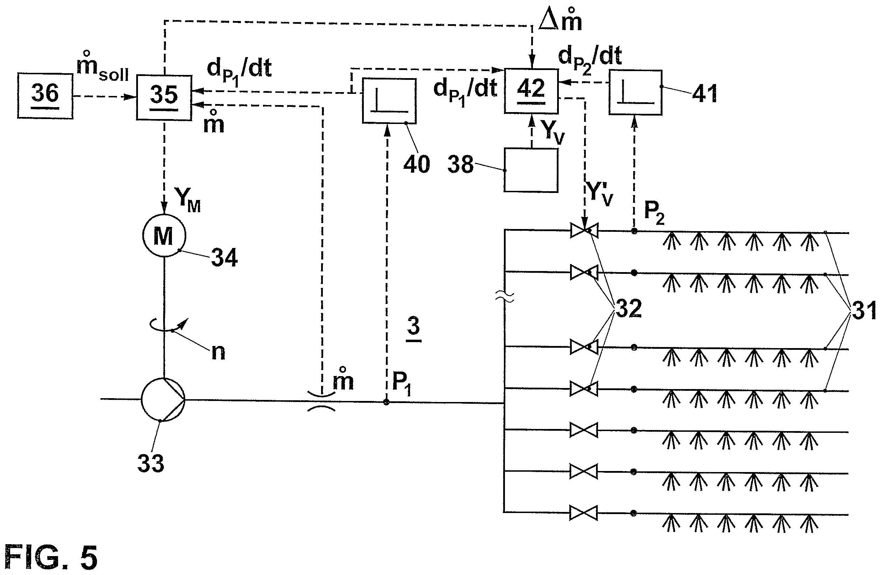

Eine weitere Ausführungsform ist in Figur 5 dargestellt. Diese unterscheidet sich von der im Zusammenhang mit Figur 4 beschriebenen durch die zusätzliche Anordnung einer Massenstrom-Messstelle zur Messung des von der Pumpe 33 geförderten Massenstroms ṁ. Der Sollwertgeber 36 liefert einen Massenstrom-Sollwert ṁ_{Soll} an den Pumpenregler 35. Dieser regelt die Pumpendrehzahl so, dass der Ist-Massenstrom m auf den Soll-Massenstrom ṁ_{SOLL} eingeregelt wird. Dabei wird wiederum der erste Druckgradient dp₁/dt ausgewertet. Dabei wird auf die oben beschriebene Weise die Regelung derart durchgeführt, dass der Betrag des ersten Druckgradienten unterhalb eines zulässigen Maximalwertes gehalten wird. Bevorzugt weist auch das Massenstrom-Sollwertsignal einen hinsichtlich des Betrags begrenzten Gradienten auf. Die Regelung der Stellung des Ventils 32 erfolgt im Wesentlichen auf die oben beschriebene Weise.

Die oben beschriebenen Beispiele erschliessen dem Fachmann beispielhaft die mannigfachen Möglichkeiten, welche ihm das in den Ansprüchen gekennzeichnete Zerstäubungs- und Eindüsungssystem zur Vermeidung von Druckschlägen im Rohrsystem bietet.

### Bezugszeichenliste

- 1: Gasturbogruppe
- 2: Luftansaugkanal
- 3: Zerstäubungs- und Eindüsungssystem
- 11: Verdichter
- 12: Brennkammer
- 13: Turbine
- 14: Welle
- 15: Generator
- 21: Wetterschutzlamellen
- 22: Luftfilter
- 23: Schalldämpfer
- 31: Düsenrohre
- 32: Absperr- und/oder Drosselorgane, Proportionalventile
- 33: Pumpe
- 34: Motor
- 35: Steuergerät, Drehzahlregler
- 36: Funktionsblock, Sollwertgeber
- 37: Verzögerungsglied
- 38: Funktionsblock
- 39: Verzögerungsglied
- 40: Differenzierer
- 41: Differenzierer
- 42: Regler
- ṁ: Massenstrom
- ṁ_{SOLL}: Massenstrom-Sollwert
- Δṁ: Massenstrom-Regelabweichung
- n: Drehzahl
- p_{SOLL}: Druck-Sollwert
- p₁: erster Druckmesswert
- dp₁/dt: Gradient des ersten Druckmesswertes
- p₂: zweiter Druckmesswert
- dp₂/dt: Gradient des zweiten Druckmesswertes
- X: Ventilstellung
- Y_{M}: Stellgrösse für Motor
- Y_{V}: Stellgrösse für Ventil
- Y'_{V}: Ventilsteuergrösse

## Patentansprüche

1. Verfahren zum Betrieb eines Zerstäubungs- und Eindüsungssystems (3) zum Eindüsen eines Flüssigkeitsnebels in einen Ansaugkanal (2) einer luftatmenden Wärmekraftmaschine (1), umfassend Einspritzdüsen, Rohrleitungen, wenigstens eine Pumpe (33), sowie wenigstens ein Proportionalventil (32) mit einem linearen Verlauf der Flüssigkeitsmassenstrom-Kennlinie (ṁ) über der Ventilstellung (X), das stromab der Pumpe zum Beaufschlagen von Düsen und/oder Düsengruppen mit von der Pumpe geförderter Flüssigkeit angeordnet ist, wobei das Verfahren die folgenden Schritte aufweist:
Messen eines ersten Drucks (p1) stromab der Pumpe (33) und stromauf des Proportionalventils (32), und
Regeln der Drehzahl (n) der Pumpe (33) derart, dass der Druck (p1) einem Druck-Sollwert (psoll) entspricht,
das Verfahren ist durch den folgenden Schritt gekennzeichnet:
Regeln der Verstellgeschwindigkeit der Pumpendrehzahl derart, dass ein maximal zulässiger Betrag des Druckgradienten (dp1/dt) unterschritten bleibt.

2. Verfahren zum Betrieb eines Zerstäubungs- und Eindüsungssystems (3) zum Eindüsen eines Flüssigkeitsnebels in einen Ansaugkanal (2) einer luftatmenden Wärmekraftmaschine (1), umfassend Einspritzdüsen, Rohrleitungen, wenigstens eine Pumpe (33), sowie wenigstens ein Proportionalventil (32) mit einem linearen Verlauf der Flüssigkeitsmassenstrom-Kennlinie (ṁ) über der Ventilstellung (X), das stromab der Pumpe zum Beaufschlagen von Düsen und/oder Düsengruppen mit von der Pumpe geförderter Flüssigkeit angeordnet ist, wobei das Verfahren die folgenden Schritte aufweist:
Messen des von der Pumpe geförderten Massenstroms (ṁ),
Regeln der Drehzahl (n) der Pumpe mit dem Massenstrom als Regelgrösse derart, dass der gemessene Massenstrom einem Soll-Massenstrom
(ṁsoll) entspricht,
Messen eines ersten Drucks (p1) stromab der Pumpe und stromauf des Proportionalventils (32); und
Bestimmen eines Gradienten (dp1/dt) des ersten Druckes;
das Verfahren ist durch den folgenden Schritt gekennzeichnet:
Regeln der Verstellgeschwindigkeit der Pumpendrehzahl derart, dass ein maximal zulässiger Betrag des Druckgradienten unterschritten bleibt.

3. Verfahren nach Anspruch 1 oder 2, **gekennzeichnet durch** die weiteren Schritte:
Messen eines zweiten Drucks (p2) stromab des Proportionalventils (32);
Verändern der Stellung des Proportionalventils (32) derart, dass ein maximaler Betrag des Druck-Zeit-Gradienten (dp2/dt) des zweiten Druckmesswertes zuverlässig unterschritten bleibt.

4. Verfahren nach Anspruch 3, **gekennzeichnet durch** den weiteren Schritt, die Geschwindigkeit der Veränderung der Ventilstellung bei Erreichen eines maximal zulässigen Betrages des Gradienten des ersten Druckmesswertes zu begrenzen.

## Claims

1. Method for operating an atomisation and injection system (3) for injecting a fluid mist into an intake channel (2) of an air-aspirating heat engine (1), comprising injection nozzles, pipelines, at least one pump (33) and at least one proportional valve (32) with a linear development of the fluid mass flow curve (m) over the valve setting (X), which valve is arranged downstream of the pump for loading nozzles and/or nozzle groups with the fluid conveyed by the pump, wherein the method comprises the following steps:
- measurement of a first pressure (p1) downstream of the pump (33) and upstream of the proportional valve (32), and
- regulation of the rotation speed (n) of the pump (33) such that the pressure (p1) corresponds to a nominal pressure value (psoll),
wherein the method is **characterised by** the following step:
- regulation of the adjustment rate of the pump rotation speed such that a maximum permitted amount of the pressure gradient (dp1/dt) is not exceeded.

2. Method for operating an atomisation and injection system (3) for injecting a fluid mist into an intake channel (2) of an air-aspirating heat engine (1), comprising injection nozzles, pipelines, at least one pump (33) and at least one proportional valve (32) with a linear development of the fluid mass flow curve (M) over the valve setting (X), which valve is arranged downstream of the pump for loading nozzles and/or nozzle groups with the fluid conveyed by the pump, wherein the method comprises the following steps:
- measurement of the mass flow (m) delivered by the pump,
- regulation of the rotation speed (n) of the pump with the mass flow as the controlled variable such that the measured mass flow corresponds to a nominal mass flow (msoll),
- measurement of a first pressure (p1) downstream of the pump and upstream of the proportional valve (32), and
- determination of a gradient (dp1/dt) of the first pressure;
wherein the method is **characterised by** the following step:
- regulation of the adjustment rate of the pump rotation speed such that a maximum permitted amount of the pressure gradient is not exceeded.

3. Method according to claim 1 or 2, **characterised by** the further steps:
- measurement of a second pressure (p2) downstream of the proportional valve (32);
- variation of the setting of the proportional valve (32) such that a maximum amount of the pressure-time gradient (dp2/dt) of the second pressure measurement value is reliably not exceeded.

4. Method according to claim 3, **characterised by** the further step of limiting the rate of variation of the valve setting when a maximum permitted amount of the gradient of the first pressure measurement value is reached.

## Revendications

1. Procédé d'exploitation d'un système de pulvérisation et d'injection (3) pour l'injection d'un brouillard de liquide dans un canal d'aspiration (2) d'un moteur thermique aérobie (1) comprenant des buses d'injection, des conduites tubulaires, au moins une pompe (33) ainsi qu'au moins une vanne proportionnelle (32) avec un tracé linéaire de la courbe caractéristique du flux massique de liquide (m) en fonction de la position de la vanne (X), qui est disposée en aval de la pompe pour l'alimentation de buses et/ou de groupes de buses avec un liquide refoulé par la pompe, ce procédé comprenant les étapes suivantes :
mesure d'une première pression (p1) en aval de la pompe (33) et en amont de la vanne proportionnelle (32) et
régulation de la vitesse de rotation (n) de la pompe (33) de façon à ce que la pression (p1) corresponde à une valeur de consigne de pression (psoll),
le procédé est **caractérisé par** l'étape suivante :
régulation de la vitesse de réglage de la vitesse de rotation de la pompe de façon à ce qu'une valeur absolue maximale du gradient de pression (dp1/dt) ne soit pas dépassée.

2. Procédé d'exploitation d'un système de pulvérisation et d'injection (3) pour l'injection d'un brouillard de liquide dans un canal d'aspiration (2) d'un moteur thermique aérobie (1), comprenant des buses d'injection, des conduites tubulaires, au moins une pompe (33) ainsi qu'au moins une vanne proportionnelle (32) avec un tracé linéaire de la courbe caractéristique du flux massique de liquide (ṁ) en fonction de la position de la vanne (X), qui est disposée en aval de la pompe pour l'alimentation de buses et/ou de groupes de buses avec un liquide refoulé par la pompe, ce procédé comprenant les étapes suivantes :
mesure du flux massique (ṁ) refoulé par la pompe,
régulation de la vitesse de rotation (n) de la pompe avec le flux massique en tant que grandeur de régulation, de façon à ce que le flux massique mesuré corresponde à un flux massique de consigne (ṁsoll),
mesure d'une première pression (p1) en aval de la pompe (33) et en amont de la vanne proportionnelle (32) ; et
détermination d'un gradient (dp1/dt) de la première pression ;
le procédé est **caractérisé par** l'étape suivante :
régulation de la vitesse de réglage de la vitesse de rotation de la pompe de façon à ce qu'une valeur absolue maximale admissible du gradient de pression ne soit pas dépassée.

3. Procédé selon la revendication 1 ou 2, **caractérisé par** les étapes supplémentaires :
mesure d'une deuxième pression (p2) en aval de la vanne proportionnelle (32) ;
modification de la position de la vanne proportionnelle (32) de façon à ce qu'une valeur absolue maximale du gradient pression-temps (dp2/dt) de la deuxième valeur de mesure de la pression ne soit pas dépassée.

4. Procédé selon la revendication 3, **caractérisé par** l'étape supplémentaire qui consiste à limiter la vitesse de modification de la position de la vanne lorsqu'une valeur absolue maximale admissible du gradient de la première valeur de mesure de pression est atteinte.
